# EUROPÄISCHE PATENTSCHRIFT

(11) **EP 1 092 576 B1**
(45) Veröffentlichungstag und Bekanntmachung des Hinweises auf die Patenterteilung: **30.03.2005**
(21) Anmeldenummer: 00118044.7
(22) Anmeldetag: 23.08.2000
(51) Int. Cl.: B60J 7/12

(54) **Verdeck für Fahrzeuge, insbes. Klapp- oder Faltverdeck**
Soft top for vehicle, especially convertible top
Capote pour véhicule, en particulier capote escamotable ou pliante

(30) Priorität: 15.10.1999 DE 19949888
(43) Veröffentlichungstag der Anmeldung: 18.04.2001
(73) Patentinhaber: PARAT Automotive, Schönenbach GmbH + Co. KG, 42897 Remscheid (DE)
(72) Erfinder: Windpassinger, Martin, 94051 Hauzenberg (DE); Kasparek, Manfred, 94089 Neureichenau (DE)
(74) Vertreter: Patentanwälte Ostriga, Sonnet, Wirths & Roche

(56) Entgegenhaltungen:
- EP-A- 0 569 955
- EP-A- 0 873 896
- DE-C- 4 218 380
- US-A- 4 964 668
- US-A- 5 297 838
- PATENT ABSTRACTS OF JAPAN vol. 1997, no. 08, 29. August 1997 (1997-08-29) -& JP 09 109306 A (PAJIERO SEIZO KK), 28. April 1997 (1997-04-28)

## Beschreibung

Die Erfindung bezieht sich auf ein Verdeck für Fahrzeuge, insbes. Klapp- oder Faltverdeck, mit einem äußeren Verdeckbezug und einem aufbauseitig angelenkten Verdeckgestänge mit quer zur Fahrzeuglängsrichtung verlaufenden und mittels Spanngurten untereinander verbundenen Spriegeln, ferner mit einer der dem Fahrgastraum zugekehrten Fläche des äußeren Verdeckbezugs zugeordneten wärme- und schallisolierenden, mindestens mittelbar an den Spriegeln gehaltenen Dämmschicht, sowie ggf. mit einem Verdeck-Himmel.

Fahrzeugverdecke dieser Art sind beispielsweise bekannt aus JP 09 109306 DE 38 29 345 C2 und DE 297 18 206 U1.

Bezüglich des Fahrkomforts spielt die wärme- und schallisolierende Dämmung eines Klapp- oder Faltverdecks eine wesentliche Rolle. Die genannten Dokumente des Standes der Technik schlagen vor, unterhalb des äußeren Verdeckbezugs eine Dämmschicht anzuordnen, die aus einem Faservlies, z.B. aus Polyesterfaser, Gummihaargewebe od.dgl. gebildet ist. Ferner umfaßt die Dämmschicht eine obere und eine untere Trägerbahn. Der äußere Verdeckbezug, ein innerer Dachhimmel und die beiden Trägerbahnen der Dämmschicht sind an sämtlichen quer verlaufenden Spriegeln befestigt. Weiterhin sind der äußere Verdeckbezug, die beiden örtlich aneinander liegenden Trägerbahnen und innenliegende Haltestreifen, die jeweils um den zugeordneten Spriegel herumgeführt und mit diesem verklebt oder verschraubt sind, oberhalb der Spriegel miteinander vernäht oder verschweißt. Im Bereich der Befestigung des Verdeckbezuges und der Trägerbahnen der Dämmschicht im Bereich der Spriegel ist der Querschnitt der Dämmschicht dem Formverlauf der Spriegel angepaßt und läuft hier auf Null aus (DE 38 29 345 C2).

Die JP09109306 offenbart einen mehrlagigen Dämmstoff, der durch Verkleben am Verdeckstoff angebrackt ist.

Wie die obige Schilderung des Aufbaus und der Anordnung der Dämmschicht zeigt, ist diese Anordnung relativ kompliziert. Entsprechend aufwendig ist die Herstellung eines derart gedämmten Verdecks.

Das gleiche trifft zu für die in DE 297 18 206 U1 beschriebene Anordnung. Auch dort ist die heute in der Praxis üblicherweise verwendete Dämmschicht vorgesehen, die einen Faservlieskem umfaßt mit einer oberen bzw. äußeren und einer unteren bzw. inneren Hüllenlage. Die Dämmschicht kann ohne Verbindung zum Spriegel und zum äußeren Verdeckbezug angeordnet sein. An denjenigen Stellen, an denen mittels einer Fahne der äußere Verdeckbezug an die Spriegel angebunden ist, weist die Dämmschicht Durchgriffsöffnungen auf. Das Prinzip besteht also darin, den äußeren Verdeckbezug mittels der fahnenartigen Anbindungen an den Spriegeln zu befestigen. Die Dämmschicht setzt, sofern sie nicht am äußeren Verdeckstoff befestigt wird, das Vorhandensein eines Himmels zwingend voraus, zwischen dem und dem äußeren Verdeckbezug sie dann frei einliegen kann.

Der vorliegenden Erfindung liegt die Aufgabe zugrunde, ein Fahrzeugverdeck der im Oberbegriff des Anspruches 1 näher umrissenen Art zur Verfügung zu stellen, bei dem Ausbildung, Anordnung und Anbringung der Dämmschicht vereinfacht und verbessert sind.

Die Erfindung löst diese Aufgabe mit den Merkmalen des unabhängigen Anspruchs 1 und ist entsprechend dadurch gekennzeichnet, daß die Dämmschicht als Gießharzschicht aus einem gießfähigen, schäumbaren Kunststoff besteht, der zumindest auf Flächenbereiche der dem Fahrgastraum zugekehrten Seite des äußeren Verdeckbezugs unmittelbar und vollflächig aufgebracht ist.

Im Unterschied zum Stand der Technik besteht die Dämmschicht nicht mehr aus ein in mehreren Einzelteilen zu konfektionierenden Faservlieseinlagen, sondern aus einer unmittelbar auf die innere Fläche des äußeren Verdeckbezugs aufgeschäumten Kunststoffschicht. Die Schicht benötigt nur wenige Millimeter Dicke, um ihre Hauptaufgabe der Wärme- und Schallisolation zu erfüllen. Wesentlich für die Erfindung ist es, daß die Dämmschicht allein durch das Aufgießen auf die Innenseite des äußeren Verdeckbezugs mit diesem festhaftend verbunden ist. Es bedarf daher keiner besonderen Maßnahmen und Nacharbeiten, um die Dämmschicht mit dem Verdeckstoff zu verbinden.

Sofern im Kennzeichenteil des Patentanspruches 1 "zumindest Flächenbereiche" angesprochen sind, soll damit zum Ausdruck gebracht werden, daß zwar im Hinblick auf die Dämmung die schäumbare Kunststoffschicht möglichst großflächig auf die Innenseite des äußeren Verdeckbezuges aufgetragen sein soll, daß jedoch gewisse (geringere) Flächenbereiche aus bestimmten, nachstehend erörterten Gründen freigelassen werden können.

Die als Gießharzschicht ausgeführte Dämmschicht besteht vorzugsweise aus einem auf die innere (Gewebe) - Lage des äußeren Verdeckbezugs unter Hochdruck aufgegossenen Kunststoff auf insbesondere PUR-Basis. Das Aufgießen der Kunststoffmasse unter Hochdruck von in der Praxis ca. 140 bis 150 bar in einer Gießform bewirkt einen innigen Verbund der Gießharzschicht mit dem Verdeckbezug. Dies insbesondere dann, wenn die innere Lage des äußeren Verdeckbezugs - wie bei typischen Verdeckstoffen heute üblich - aus einem Gewebe besteht. Das Aufbringen der Gießharzschicht mit Hochdruck bewirkt dann ein Eindringen der Kunststoffmasse in das Gewebe und schafft so einen formschlüssigen Verbund mit dem äußeren Verdeckbezug.

In der Praxis hat es sich als vorteilhaft erwiesen, die Härte des PUR-Kunststoffes auf etwa 40 Shore D einzustellen, wobei der Kunststoff ein Zwei-Komponenten-Kunststoff mit einem Mischungsverhältnis von Polyol:Isocyanat von etwa 100:38 Gewichtsanteilen ist. Durch Änderung dieses Mischungsverhältnisses kann die Shore-Härte beeinflußt werden.

Weiterhin hat sich eine Schichtdicke der Gießharzschicht zur Erfüllung der an die Dämmung gestellten Aufgaben von etwa 2 bis 6 mm als besonders vorteilhaft erwiesen.

Der erfindungsgemäße Vorschlag, die Dämmung mit einer auf die Innenseite des äußeren Verdeckbezugs aufzubringenden Gießharzschicht zu realisieren, hat weitere erhebliche Vorteile. So ist es entsprechend einem weiteren Vorschlag der Erfindung möglich, mittels der Gießharzschicht Nähte zwischen Partien des äußeren Verdeckbezugs zu überschäumen und diese damit unter Verzicht auf besondere Nahtabdichtungen gas- und feuchtigkeitsdicht zu versiegeln. Dadurch entfallen die z.B. bei den üblichen Kappnähten erforderlichen Abdichtungsmaßnahmen, die bisher ein unter Hitzeeinwirkung klebfähiges Schweißband und ein zusätzliches, die Nahtlinie überdeckendes Dichtband erforderten. Unter Anwendung des erfindungsgemäßen Prinzips genügt nunmehr ohne weiteres eine schlichte Naht.

Gemäß einem weiteren Vorschlag können die im wesentlichen in Fahrzeuglängsrichtung verlaufenden, an den Spriegeln angelenkten Spanngurte zumindest im Querungsbereich der Spriegel mit einer dem äußeren Verdeckbezug zugewandten Gießharzschicht überschäumt sein, wobei es besonderes vorteilhaft ist, wenn die Spanngurte im wesentlichen über ihre Länge hinweg zumindest weitgehend vollflächig überschäumt sind. In diesem Zusammenhang dient die Gießharzschicht als Polsterung, die verhindert, daß sich die Spriegel auf der Außenseite des äußeren Verdeckbezugs abzeichnen. Dies ist insbesondere für den als C-Säule fungierenden Eckspriegel von besonderer Bedeutung, über den das geschlossene Verdeck am stärksten gespannt ist.

Ein weiterer wesentlicher Vorteil der erfindungsgemäß vorgesehenen Gießharzschicht besteht darin, daß die auf die Innenseite des äußeren Verdeckbezugs bzw. auf die Spanngurte aufgegossene Gießharzschicht zumindest bereichsweise unterbrochen oder in ihrer Schichtdicke vermindert sein kann, womit insbesondere Sollfalt- bzw. Knickzonen ausgebildet werden können. Dies geschieht während des in der Gießform erzeugten Aufbringens der Kunststoffmasse auf den Verdeckstoff bzw. auf die Spanngurte. Allein durch Auswahl dickenverminderter oder unterbrochener Zonen der Dämmschicht kann somit das Öffnungs- und Schließverhalten des gesamten Verdecks optimal in vorherbestimmbarer und reproduzierbarer Weise beeinflußt bzw. eingerichtet werden.

In Abkehr vom bisherigen Stand der Technik, bei dem verdecktypische Anbindungselemente wie elastische Zugstreifen, Spriegel-, Spanngurt- oder Himmelanbindungen mit Hilfe von Fahnen, einerseits fest mit diesen Teilen und andererseits an den entsprechenden Gestängeteilen wie insbesondere den Spriegeln befestigt sind, werden nunmehr solche verdecktypischen Anbindungselemente von der Gießharzschicht selbst ausgebildet, indem sie werkstoffeinheitlich-stoffschlüssig an diese angeformt sind. Deshalb entfallen jegliche besondere Maßnahmen, die Anbindungen getrennt herzustellen und an den entsprechenden Verdeckteilen befestigen zu müssen. Die Anbindung beispielsweise des äußeren Verdeckstoffes an den Spriegeln erfolgt also mittelbar über die fest mit der Innenseite des äußeren Verdeckstoffes verbundene Gießharz- bzw. Dämmschicht, mit den Anbindungselementen als integrale Bestandteile des Materials.

Alternativ können verdecktypische Anbindungselemente auch gesonderte Teile sein, die erfindungsgemäß von der Gießharzschicht umschäumt bzw. in diese eingebettet sind. Solches empfiehlt sich beispielsweise dann, wenn sich aus dem Material der Gießharzschicht selbst geeignete Anbindungselemente wie gummiartig elastische Zugbänder od.dgl. nicht ausformen lassen. Solche gummielastischen Bändern dienen bei Fahrzeugverdecken herkömmlicher Bauart beispielsweise dazu, den äußeren Verdeckbezug an die C-Säule bzw. an den diese bildenden Spriegel zugelastisch anzubinden. Auch ist es auf einfache Weise möglich, die Spanngurte elastisch mit anderen Spriegeln zu verbinden.

Vorzugsweise sind die Anbindungen als zungen- bzw. lappenartige, biegsame Einzel- oder Doppel-Fahnen aus der Fläche der Gießharzschicht erhaben vorstehend angeordnet und zur Befestigung an Spriegeln oder anderen Gestängeteilen an diese anschmiegbar.

Im Rahmen des erfindungsgemäßen Konzeptes ist auch die Anbindung des Verdeck-Himmels an Spriegel auf einfache Weise auszuführen, insbesondere dadurch, daß auf der zum äußeren Verdeckbezug weisenden Fläche eines Verdeck-Himmels im Bereich der Spriegel jeweils eine im wesentlichen spriegelparallel verlaufende Gießharzschicht aufgeschäumt ist zur Bildung eines Polsters sowie zur Halterung bzw. Bereitstellung von Spriegelanbindungen.

Zu erwähnen ist noch ein weiterer Vorteil der auf Verdeckelemente aufgeschäumten Gießharzschicht im Sinne einer Stabilisierung dieser Teile. So trägt die Gießharzschicht beispielsweise im Dachbereich erheblich zur Formstabilität gegen Aufblähen unter Innendruck bei rascher Fahrt bei.

Die Erfindung wird nachfolgend anhand von in den beiliegenden Zeichnungen dargestellte Ausführungsbeispiele näher erläutert. In den Zeichnungen zeigen:
- Fig. 1: eine schematische, schaubildliche Ansicht eines als Klappverdeck ausgebildeten Fahrzeugverdecks,
- Fig. 2: eine horizontale Innenansicht des Verdecks nach Fig. 1,
- Fig. 3: ein Vertikalschnitt durch das hintere Seitenteil des Verdecks gemäß der Schnittlinie III-III in Fig. 2,
- Fig. 4: einen Teil-Längsschnitt durch äußeren Verdeckbezug und Spriegel zur Darstellung einer Spriegelanbindung des äußeren Verdeckbezugs,
- Fig. 5: eine der Fig. 4 entsprechende Darstellung, jedoch zusätzlich mit einem am selben Spriegel angelenkten Verdeck-Himmel,
- Fig. 6: eine der Fig. 4 entsprechende Darstellung, jedoch mit einer separaten, in die Dämmlage eingearbeiteten Spriegelanbindung,
- Fig. 7: eine entsprechende Anordnung an einem Spanngurt,
- Fig. 8: eine Schnittdarstellung zur Veranschaulichung einer Soll-Knick-bzw. Soll-Faltzone und
- Fig. 9: eine schaubildliche Darstellung dieser Zone im Bereich eines Spanngurtes.

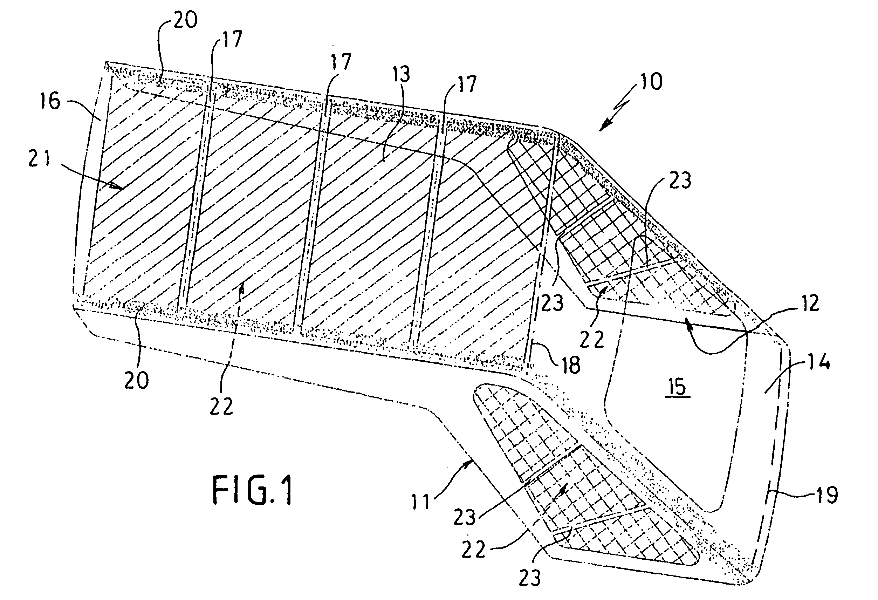

Fig. 1 veranschaulicht am Beispiel eines Klappverdecks für Cabriolets ein geschlossenes Fahrzeugverdeck 10. Es umfaßt die beiden Seitenteile 11 und 12, ein Dachteil 13 und ein Heckteil 14 mit einer darin eingearbeiteten Scheibe 15. Mit 16 ist der dem Frontscheibenrahmen des Fahrzeugs zugeordnete Windlaufspriegel bezeichnet. Die Bezugsziffem 17 weisen auf quer zur Fahrzeuglängsachse verlaufende Spriegel hin. Mit 18 ist der Eckspriegel bezeichnet, der den im wesentlichen oberen horizontalen Verdeckabschnitt in den rückwärtigen Verdeckabschnitt 15 umlenkt, und 19 bezeichnet schließlich den sogenannten Spannbügel, der beim Schließen des Verdecks 10 zuletzt am Fahrzeugaufbau verriegelt wird. Schließlich verfügt ein Verdeck 10 üblicherweise noch über sich randnah des Verdecks 10 und in Fahrzeuglängsrichtung erstreckende, zwischen dem äußeren Verdeckbezug und den Spriegeln 17 und 18 verlaufende Spanngurte 20.

Ein Klappverdeck 10 umfaßt sodann einen auf das Verdeckgestell aufgezogenen, die Abschnitte 11, 12, 13 und 14 bildenden äußeren Verdeckbezug 21. Moderne Verdeckstoffe für den äußeren Verdeckbezug sind dreischichtig ausgebildet mit einem Obergewebe aus Polyacryl, einer Zwischenschicht aus synthetischem Kautschuk auf PUR-Basis oder auf Butylbasis sowie einem inneren oder Untergewebe, welches z.B. aus Polyester oder einem Mischgewebe aus Baumwolle und Polyester besteht.

Sofern in den Zeichnungen Schnitte durch den äußeren Verdeckbezug gezeigt sind, sind diese drei Stofflagen nicht dargestellt, zumal sie als standardmäßig vorausgesetzt werden können. Wesentlich ist, daß die aus synthetischem Kunststoff bestehende Schicht (mit Ausnahme der Nahtbereiche) gas- und wasserundurchlässig ist, das Verdeck also vollständig dichtet. Besonders zweckmäßig im Rahmen der Erfindung ist es, daß die innere Verdeckstoffschicht von einem Gewebe ausgebildet ist.

In Fig. 1 ist im Dachbereich 13 des Verdecks 10 mit schraffierten Linien und in den Seitenteilen 11 mit kreuzschraffiertem Muster angedeutet, daß auf der Innenseite des äußeren Verdeckbezugs 21 Dämmschichten angebracht sind.

Die Dämmschicht 22 erstreckt sich beim in Fig. 1 dargestellten Ausführungsbeispiel dachseitig im wesentlichen vollflächig und durchgehend auf der inneren Fläche des äußeren Verdeckbezugs 10. Dies ist im Prinzip auch bei den Seitenteilen 11 der Fall, doch sind diese Dämmschichten 22 gezielt von mit 23 bezeichneten linienhaften Zonen unterteilt, wobei es sich bei diesen Zonen 23 um Dickenverminderungen oder Unterbrechungen der Dämmschicht 22 handeln kann. Die Zonen 23 bilden definierte Knick- bzw. Faltzonen innerhalb der Seitenteile 11 aus, um eine reproduzierbar exakte Ablage des Verdecks beim Öffnen zu gewährleisten. In Fig. 1 nicht dargestellte, sich quer über das Dachteil 13 innerhalb der Dämmung 12 erstreckende Schwächungszonen können ebenfalls an geeigneter Stelle angeordnet sein.

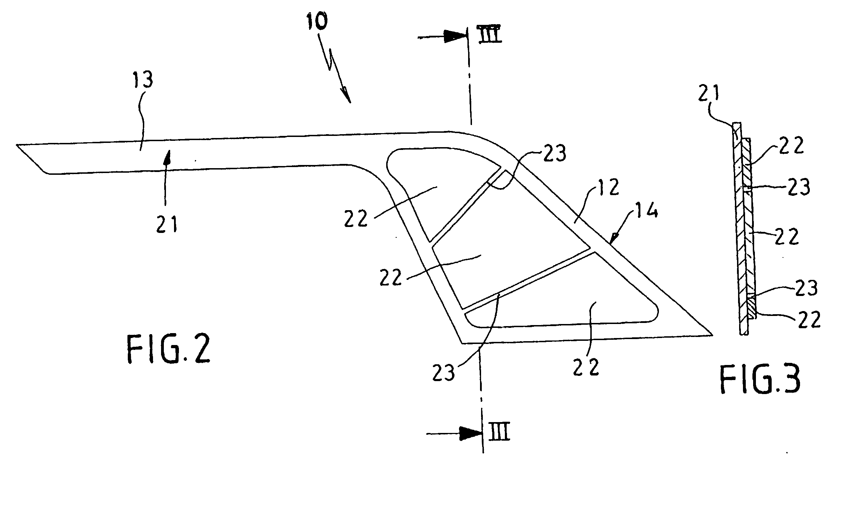

Das Prinzip der "Dämmschicht-Schwächungszonen" und deren Anordnung zeigen deutlicher Fig. 2 in der Innenansicht und Fig. 3 im Längsschnitt.

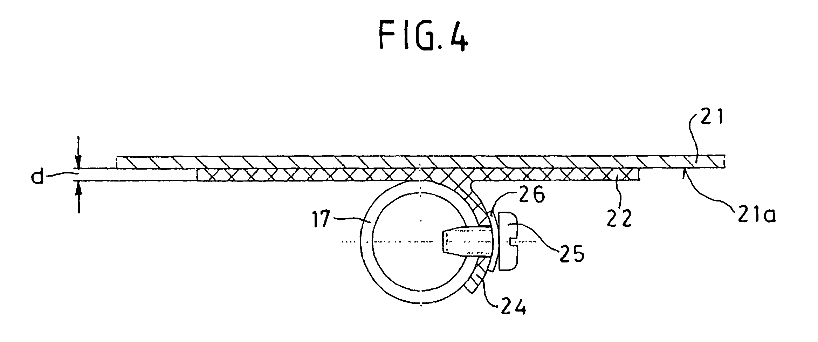

Der Längsschnitt gemäß Fig. 4 zeigt einen Ausschnitt aus dem äußeren Verdeckbezug 21 (der, wie oben beschrieben, aus einem dreilagigen Stoff besteht) und dessen zum Fahrzeuginnenraum weisende Unterfläche 21a mit der Dämmschicht 22 ausgerüstet ist. Diese Dämmschicht besteht aus einem gießfähigen Kunststoffmaterial, insbesondere aus einem Zweikomponenten-PUR-Kunststoff, der unter hohem Druck von 140 bis 150 bar in einer Gießform, in die die entsprechende(n) Verdeckstoffpartie(n) eingelegt werden, aufgegossen wird. Da die innere Fläche 21a des äußeren Verdeckbezugs 21 üblicherweise und vorzugsweise ein Gewebe ist, läuft das zunächst noch flüssige Kunststoffmaterial in die Poren des Gewebes ein und verkrallt sich formschlüssig darin, sobald es ausgeschäumt ist.

Die Schichtdicke d der Dämmschicht 22 beträgt in der praktischen Ausführung in der Regel wenigstens 2 mm bis ca. 6 mm, je nach den speziellen Anforderungen hinsichtlich Dämmung und/oder Polsterung.

Wesentlich ist es, daß das Kunststoffmaterial, aus dem die Dämmschicht 22 gebildet ist, und somit die Dämmschicht 22 selbst ohne gesonderte Verbindungsmittel an der inneren Oberfläche 21a des äußeren Verdeckbezuges 21 fest haftet.

In Fig. 4 ist außerdem ein Spriegel 17 im Querschnitt dargestellt. Die Spriegel eines Verdecks bilden die den äußeren Verdeckbezug 21 tragende Vorrichtung, und der äußere Verdeckbezug 21 wird an den Spriegeln angelenkt. Dies geschieht beim Stand der Technik unmittelbar dadurch, daß streifenartige Spriegelanbindungen mit dem äußeren Verdeckbezug 21 fest verbunden, insbesondere vernäht oder verklebt und auf der inneren bzw. auf der Unterseite an den Spriegeln befestigt werden.

Beim Gegenstand vorliegender Erfindung ist die Anordnung nunmehr so getroffen, daß mit 24 bezeichnete Spriegelanbindungen, die auch hier die Form von Fahnen oder Leisten aufweisen, einstückig-stoffschlüssig mit der Dämmung 22 ausgebildet sind. Dies geschieht dadurch, daß die Gießform, in der die Dämmschicht 22 mit dem äußeren Verdeckbezug 21 verbunden wird, diese leisten- oder fahnenartigen Abschnitte berücksichtigt.

Die Spriegelanbindungen 24, die von der Dämmschicht 22 abstehen, sind wie diese relativ weich und flexibel (ein günstiger Härtegrad für die Dämmung 22 und somit auch für die Spriegelanbindungen 24 liegt bei ca. 40 Shore D). Somit lassen sich die Spriegelanbindungen an die äußere Oberfläche der Spriegel 17 anschmiegen. Gesichert werden sie zum Beispiel mit Hilfe von Schrauben 25 und geeigneter Unterlegscheiben 26. Selbstverständlich sind auch andere dem Fachmann geläufige Befestigungsmittel möglich.

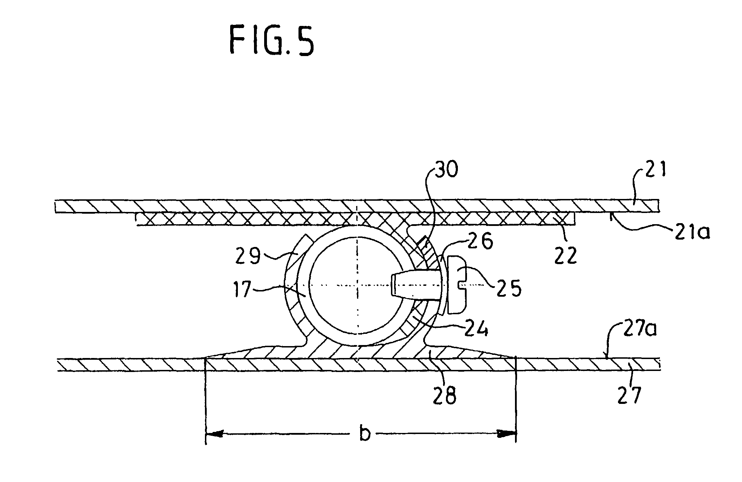

Fig. 5 greift die Darstellung nach Fig. 4 auf, ist jedoch um einen Verdeck-Himmel 27 und dessen Anbindung an den Spriegel 17 vervollständigt. Bei diesem Ausführungsbeispiel ist die zum äußeren Verdeckstoff 21 weisende Innenfläche 27 mit quer zur Fahrzeuglängsachse verlaufenden Streifen der Breite b einer Gießharzschicht 28 ausgerüstet, die prinzipiell gleiche Konsistenz aufweisen kann, wie die Gießharzschicht für die Dämmung 22. Mit der Gießharzschicht 28 sind in einander gegenüberliegend beabstandeter Anordnung zwei Leisten, Lappen oder mehrere in Längsrichtung des Spriegels aufeinander folgende Zungen 29 und 30 ausgebildet, die auf der einen Seite die Oberfläche des Spriegels 27 und auf der gegenüberliegenden Seite die Außenfläche der Spriegelanbindung 24 des äußeren Verdeckbezuges 21 umgreifen können. Beim dargestellten Ausführungsbeispiel erfolgt die Befestigung der Anbindungselemente 24 und 30 am Spriegel 17 mit derselben Schraube 25 und der Unterlegscheibe 26.

Wenn man erreichen will, daß die Spriegelanbindungen 29 und 30, die dem Verdeck-Himmel 27 zugeordnet sind, eine höhere Steifigkeit und Härte aufweisen, beispielsweise zu dem Zweck, klammerartig an Spriegel 17 und/oder Außenseite der Spriegelanbindung 24 angreifen zu können, kann man bezüglich des Verdeck-Himmels 27 den Werkstoff der Gießharzschicht 28 härter und also weniger gummiartig-weich einstellen.

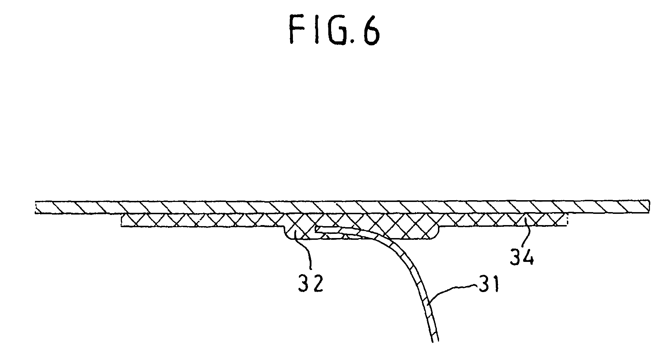

Während bei den Ausführungsbeispielen der Fig. 4 und 5 die Spriegelanbindungen 24 sowie 29 und 30 werkstoffeinheitlich-stoffschlüssig an den jeweiligen Gießharzschichten 22 bzw. 28 angebunden sind, veranschaulicht Fig. 6 eine alternative Ausgestaltung, wonach ein gesondertes Anbindungselement 31, z.B. ein Gummiband, in eine Gießharzschicht 34 eingebettet ist. Diese Einbettung ist beim Ausführungsbeispiel in einem verdickten Bereich 32 vorgesehen. An entsprechender Stelle der Gießform wird in diese der Streifen 31 eingelegt, damit er vom Kunststoffmaterial eingeschlossen werden kann.

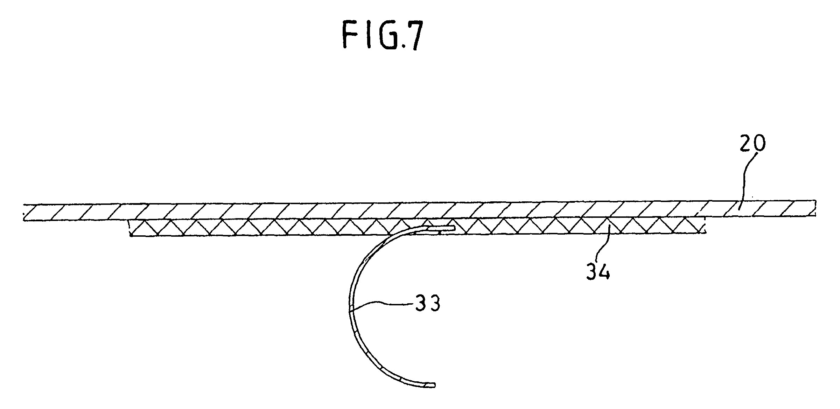

Eine geringfügig modifizierte Ausführungsform zeigt Fig. 7 anhand eines Anbindungselementes 31, welches unmittelbar, d.h. ohne Verdickung, in eine Gießharzschicht 34 eingegossen ist. Bei diesem Ausführungsbeispiel könnte es sich insbesondere um die mittels der Gießharzschicht 34 erzeugte Polsterung eines Spanngurtes 20 handeln.

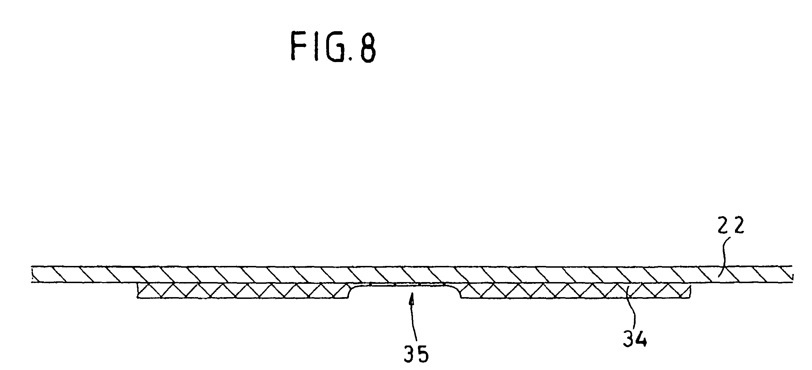

Fig. 8 veranschaulicht an einem Verdeckelement wie z.B. dem äußeren Verdeckbezug 22 angeordnete Gießharzschicht 34 mit einer in der Schichtdicke deutlich reduzierten Zone 35, die dazu bestimmt ist, in ihrem Bereich das entsprechende Verdeckelement biegeweicher bzw. faltwilliger zu gestalten. Somit dient die Schwächungszone 35 zur gezielten Definition von Falt- bzw. Knicklinien und damit zur Steuerung des Faltverhaltens des Verdecks.

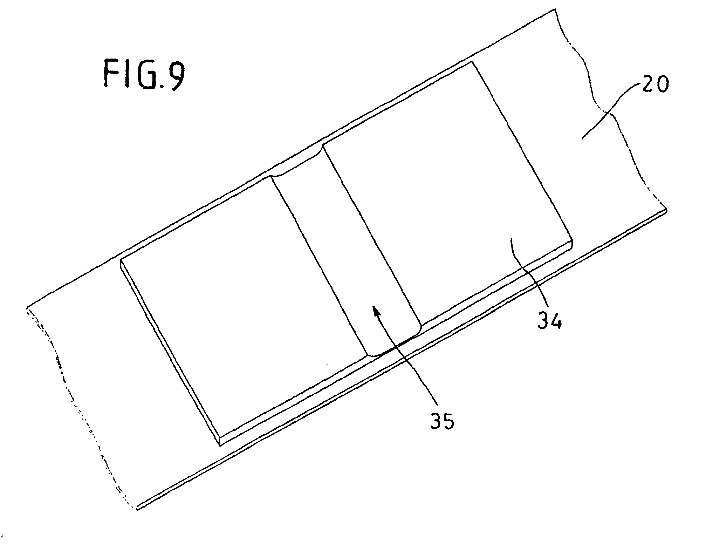

Fig. 9 veranschaulicht die Anordnung nach Fig. 8 in einer schaubildlichen Aufsicht auf einen Spanngurt 20 und läßt ferner erkennen, daß die hier in erster Linie der Polsterung dienende Gießharzschicht 34 großflächig ist, indem sie sich bis auf schmale Randpartien über die gesamte Breite des Spanngurtes 20 erstreckt.

Soweit die Erfindung anhand eines Klappverdecks für Cabriolet-Fahrzeuge erläutert wurde, sei angemerkt, daß sich ohne weiteres auch bei Faltverdecken wie Schiebedächern sinnvoll einsetzen läßt.

## Patentansprüche

1. Verdeck (10) für Fahrzeuge, insbesondere Klapp- oder Faltverdeck, mit einem äußeren Verdeckbezug (21) und einem aufbauseitig angelenkten Verdeckgestänge mit quer zur Fahrzeuglängsrichtung verlaufenden und mittels Spanngurten (20) untereinander verbundenen Spriegeln (17, 18), und mit einer der dem Fahrgastraum zugekehrten Fläche des äußeren Verdeckbezugs (21) zugeordneten wärme- und schallisolierenden, mindestens mittelbar an den Spriegeln (17, 18) gehaltenen Dämmschicht, gegebenenfalls mit einem Verdeck-Himmel (27), wobei die Dämmschicht aus einem schäumbaren Kunststoff besteht und zumindest auf Flächenbereiche der dem Fahrgastraum zugekehrten Seite des äußeren Verdeckbezugs (21) aufgebracht ist, **dadurch gekennzeichnet, dass** die Dämmschicht als Gießharzschicht (34) aus einem unmittelbar und vollflächig auf die innere Lage des äußeren Verdeckbezugs (21) unter Hochdruck aufgegossenen Kunststoff auf PUR-Basis besteht und eine Härte von etwa 40 Shore D des PUR-Kunststoffs sowie ein Mischungsverhältnis des Zwei-Komponenten-Kunststoffs von Polyol:Isocyanat von etwa 100:38 Gewichtsanteilen hat.

2. Verdeck nach Anspruch 1, **gekennzeichnet durch** eine Schichtdicke der Gießharzschicht (34) von etwa 2 bis 6 mm.

3. Verdeck nach Anspruch 1 oder 2, **dadurch gekennzeichnet, dass** mittels der Gießharzschicht (34) Nähte zwischen Partien des äußeren Verdeckbezugs (21) überschäumt und diese damit unter Verzicht auf besondere Nahtabdichtungen gas- und feuchtigkeitsdicht versiegelt sind.

4. Verdeck nach einem der vorhergehenden Ansprüche, **dadurch gekennzeichnet, dass** die im wesentlichen in Fahrzeuglängsrichtung verlaufenden, an den Spriegeln (17, 18) angelenkten Spanngurte (20) zumindest im Querungsbereich der Spriegel (17, 18) mit einer dem äußeren Verdeckbezug (21) zugewandten Gießharzschicht (34) überschäumt sind.

5. Verdeck nach Anspruch 6, **dadurch gekennzeichnet, dass** die Spanngurte (20) im wesentlichen über ihre Länge hinweg auf ihren zum äußeren Verdeckbezug (21) weisenden Flächen mit einer Gießharzschicht (34) im wesentlichen vollflächig überschäumt sind.

6. Verdeck nach einem der Ansprüche 1 bis 5, **dadurch gekennzeichnet, dass** die auf die Innenseite des äußeren Verdeckbezugs (21) bzw. auf die Spanngurte (20) aufgegossene Gießharzschicht (34) zumindest bereichsweise unterbrochen oder in ihrer Schichtdicke vermindert ist, insbes. zur Bildung von Sollfalt- bzw. Knickzonen.

7. Verdeck nach einem der Ansprüche 1 bis 6, **dadurch gekennzeichnet, dass** verdecktypische Anbindungselemente (24, 29, 30, 31, 33) wie elastische Zugstreifen, Spriegel-, Spanngurt- sowie Himmelanbindungen od.dgl. von der Gießharzschicht (34) selbst ausgebildet sind, indem sie werkstoffeinheitlich-stoffschlüssig an diese angeformt sind.

8. Verdeck nach einem der Ansprüche 1 bis 6, **dadurch gekennzeichnet, dass** verdecktypische Anbindungselemente (24; 29, 30, 31, 33) wie elastische Zugstreifen, Spriegel-, Spanngurt- sowie Himmelanbindungen od.dgl. von der Gießharzschicht umschäumt bzw. in diese eingebettet sind.

9. Verdeck nach Anspruch 7 oder 8, **dadurch gekennzeichnet, dass** die Anbindungen (24, 29, 30, 31, 33), als zungen- bzw. lappenartige biegsame Einzel- oder Doppel-Leisten aus der Fläche der Gießharzschicht (34) erhaben vorstehen und zur Befestigung an Spriegeln (17, 18) oder anderen Gestängeteilen an diese anschmiegbar sind.

10. Verdeck nach einem der vorherigen Ansprüche, **dadurch gekennzeichnet, dass** auf der zum äußeren Verdeckbezug (21) weisenden Fläche (27a) eines Verdeck-Himmels (27) im Bereich der Spriegel (17, 18) jeweils eine im wesentlichen spriegelparallel verlaufende Gießharzschicht (34) aufgeschäumt ist zur Bildung eines Polsters (28) sowie zur Halterung bzw. Bereitstellung von Spriegelanbindungen (29, 30).

## Claims

1. Roof (10) for vehicles, in particular a collapsible or folding roof, with an exterior roof hood (21) and a roof rod linkage linked to the structure, having bows (17, 18) extending transversely to the vehicle longitudinal direction and inter-connected to one another by means of tensioning belts (20), and having a thermal- and noise-insulating insulation layer cooperating with the face of the exterior roof hood (21) directed towards the passenger compartment retained at least indirectly on the bows (17, 18), and optionally having a roof lining (27), which insulation layer is made from an expandable foam plastic and is applied to at least surface regions of the side of the exterior roof hood (21) directed towards the passenger compartment, **characterised in that** the insulation layer is a cast resin layer (34) made from a plastic with a PUR base cast at high pressure directly on and across the entire surface of the inner layer of the exterior roof hood (21) and has a hardness of approximately 40 Shore D of the PUR plastic and a ratio of the mixture comprising the two-component plastic containing polyol:isocyanate is approximately 100:38 as a proportion by weight.

2. Roof as claimed in claim 1, **characterised by** a layer thickness of the cast resin layer (34) of approximately 2 to 6 mm.

3. Roof as claimed in claim 1 or 2, **characterised in that** the cast resin layer (34) is foamed on top of seams between parts of the exterior roof hood (21) which seals them rendering them impermeable to gas and moisture without needing any special seam seals.

4. Roof as claimed in one of the preceding claims, **characterised in that** foam is applied on top of the tensioning belts (20) essentially extending in the vehicle longitudinal direction and linked to the bows (17, 18) by means of a cast resin layer (34) directed towards the exterior roof hood (21).

5. Roof as claimed in claim 6, **characterised in that** a cast resin layer (34) is foamed essentially along the length of the surfaces of the tensioning belts (20) facing the exterior roof hood (21) essentially covering their entire surface.

6. Roof as claimed in one of claims 1 to 5, **characterised in that** the cast resin layer (34) cast onto the inner face of the exterior roof hood (21) and onto the tensioning belts (20) is interrupted or has a reduced layer thickness in at least certain regions, in particular to form desired folding or bending zones.

7. Roof as claimed in one of claims 1 to 6, **characterised in that** attachment elements (24, 29, 30, 31, 33) of the type typically used on roofs, such as elastic tensioning strips, attachments for bows, tensioning belts and a roof lining or similar are formed by the cast resin layer (34) itself by moulding them on integrally with the material by a material join.

8. Roof as claimed in one of claims 1 to 6, **characterised in that** attachment elements (24, 29, 30, 31, 33) of the type typically used on roofs, such as elastic tensioning strips, attachments for bows, tensioning belts and a roof lining or similar have the cast resin layer foamed around them or are embedded in it.

9. Roof as claimed in claim 7 or 8, **characterised in that** the attachments (24, 29, 30, 31, 33) are provided as tongue-type or tang-type bendable single or double strips standing proud of the surface of the cast resin layer (34) and can be bent thereon to attach them to bows (17, 18) or other rod linkage parts.

10. Roof as claimed in one of the preceding claims, **characterised in that** a cast resin layer (34) is foamed onto the surface (27a) of a roof lining (27) facing the exterior roof hood (21) in the region of the bows (17, 18), respectively extending parallel with the bows in order to form a cushion (28) and to retain or provide bow attachments (29, 30).

## Revendications

1. Capote (10) pour véhicules en particulier capote rabattable ou pliable, avec un revêtement extérieur de capote (21) et une tringlerie de capote articulée côté carrosserie, comprenant des arceaux (17, 18) s'étendant transversalement par rapport à la direction longitudinale du véhicule et reliés entre eux par des sangles tendeuses (20), et avec une couche isolante associée à la face, tournée vers l'habitacle, du revêtement extérieur de capote (21), couche isolante assurant une isolation thermique et sonore, maintenue au moins indirectement sur les arceaux (17, 18), le cas échéant avec un habillage de pavillon de capote (27), la couche isolante étant formée d'une matière synthétique pouvant être rendue alvéolaire et étant appliquée au moins sur des zones de surface de la face, tournée vers l'habitacle, du revêtement extérieur de capote (21), **caractérisée en ce que** la couche isolante est formée d'une couche de résine collée (34) en une matière synthétique à base de PUR, coulée sous haute pression, directement et sur toute la surface, sur la couche intérieure du revêtement extérieur de capote (21), ayant une dureté d'environ 40 shore D de la part de la matière synthétique et un rapport de mélange de la matière synthétique à deux composants, polyol:isocyanate, d'environ 100:38 parties en poids.

2. Capote selon la revendication 1, **caractérisée par** une épaisseur de couche d'environ 2 à 6 mm pour la couche de résine coulée (34).

3. Capote selon la revendication 1 ou 2, **caractérisée en ce qu'**au moyen de la couche de résine coulée (34) des cordons d'attachement entre des parties du revêtement extérieur de capote (21) sont rendus extérieurement alvéolaires et ceux-ci étant scellés de façon étanche au gaz et à l'humidité, en renonçant ainsi à l'utilisation de joints d'étanchéité de cordons particuliers.

4. Capote selon l'une des revendications précédentes, **caractérisée en ce que** les sangles tendeuses (20), articulées sur les arceaux (17, 18) s'étendant sensiblement dans la direction longitudinale du véhicule, sont revêtues de façon alvéolaire, au moins dans la zone de croisement des arceaux (17, 18), par une couche de résine coulée (34) tournée vers le revêtement extérieur de capote (21).

5. Capote selon la revendication 6, **caractérisée en ce que** les sangles tendeuses (20), sur pratiquement toute leur longueur, sur leurs faces tournées vers leur revêtement extérieur de capote (21), sont revêtues de façon alvéolaire pratiquement sur toute leur surface par une couche de résine coulée (34).

6. Capote selon l'une des revendications 1 à 5, **caractérisée en ce que** la couche de résine coulée (34), coulée sur la face intérieure du vêtement extérieur de capote (21) ou sur les sangles ou sangles tendeuses (20), est interrompue au moins par zones, ou subit une diminution de son épaisseur de couche, en particulier pour former des zones destinées au pliage ou à l'inflexion.

7. Capote selon l'une des revendications 1 à 6, **caractérisée en ce que** des éléments d'attachement (24, 29, 30, 31, 33) typiques d'une capote, tels que des bandes de traction élastiques, des attachements d'arceaux de sangles tendeuses ainsi que d'habillage de pavillon ou analogues, sont formés par la couche de résine coulée (34) elle-même, par le fait qu'ils sont formés d'un seul tenant sur celles-ci, par une liaison par la matière, unitaire par le matériau.

8. Capote selon l'une des revendications 1 à 6, **caractérisée en ce que** des éléments d'attachement (24, 29, 30, 31, 33) typiques d'une capote, tels que des bandes de traction, des attachements d'arceaux de sangles tendeuses, ainsi que d'habillage de pavillon ou analogues, sont revêtus de façon alvéolaire par la couche de résine coulée, ou incorporés dans celle-ci.

9. Capote selon la revendication 7 ou 8, **caractérisée en ce que** les attachements (24, 29, 30, 31, 33), réalisés sous forme de bandes individuelles ou doubles, flexible, du genre de languettes ou de pattes, font saillie, en relief, de la surface de la couche de résine coulée (34) et, pour assurer la fixation sur des arceaux (17, 18) ou sur d'autres parties de la tringlerie, peuvent être appliqués sur ceux-ci en épousant leur forme.

10. Capote selon l'une des revendications précédentes, **caractérisée en ce que**, sur la face (27a), tournée vers le revêtement extérieur de capote (21), d'un habillage de pavillon de capote (27), dans la zone des arceaux (17, 18), est chaque fois appliquée, de façon alvéolaire, une couche de résine coulée (34) s'étendant sensiblement parallèlement aux arceaux, pour former un coussin ou rembourrage (28), ainsi que pour le maintien ou la fourniture d'attachements aux arceaux (29, 30).
